# EUROPÄISCHE PATENTSCHRIFT

(11) **EP 1 990 317 B1**
(45) Veröffentlichungstag und Bekanntmachung des Hinweises auf die Patenterteilung: **22.12.2010**
(21) Anmeldenummer: 07123039.5
(22) Anmeldetag: 12.12.2007
(51) Int. Cl.: C02F 3/12, G01F 23/14

(54) **Verfahren zum Betreiben einer Kläranlage sowie Kläranlage**
Method for operating a waste water treatment plant and waste water treatment plant
Procédé destiné au fonctionnement d'une station d'épuration, ainsi que station d'épuration

(30) Priorität: 13.12.2006 DE 102006059198
(43) Veröffentlichungstag der Anmeldung: 12.11.2008
(73) Patentinhaber: Boller, Reinhard, 57234 Wilnsdorf (DE)
(72) Erfinder: Boller, Reinhard, 57234 Wilnsdorf (DE)
(74) Vertreter: Haverkamp, Jens

(56) Entgegenhaltungen:
- EP-A- 1 860 073
- DE-A1- 19 515 366
- DE-A1- 19 838 488
- DE-U1- 20 320 908
- DE-U1-202005 006 689

## Beschreibung

Die Erfindung betrifft ein Verfahren zum Betreiben einer Kläranlage mit wenigstens einem Prozessbecken, insbesondere einer nach dem SBR-Verfahren arbeitenden Kleinkläranlage mit, bei welchem Verfahren wenigstens ein Becken der Kläranlage in zeitlichen Abständen zum Zuführen von Sauerstoff an den darin enthaltenen Belebtschlamm belüftet wird und in diesem Becken eine Füllstandshöhenerfassung durch Messen des in der Luftleitung herrschenden Druckes und anschließendem Auswerten des Messergebnisses erfolgt. Ferner betrifft die Erfindung eine Kläranlage mit wenigstens einem Prozessbecken und zumindest einer Belüftungseinrichtung zum Zuführen von Sauerstoff an den in dem Becken enthaltenen Belebtschlamm, umfassend einen Verdichter, eine an den Verdichter angeschlossene und von diesem bei einem Betrieb desselben beaufschlagte, in dem Becken mündende Luftleitung sowie einen in die Luftleitung eingeschalteten Drucksensor.

Um dezentral Abwässer reinigen (klären) zu können, sind Kleinkläranlagen entwickelt worden. Viele dieser Kleinklärahlagen arbeiten im Unterschied zu herkömmlichen kontinuierlich arbeitenden Kläranlagen sequenziell. Die Reaktoren, in denen die Wasserreinigung bei sequentiell arbeitenden Kläranlagen stattfindet, werden daher auch als SBR-Reaktoren (Sequencing Batch Reactor) bezeichnet. Bei diesem Reinigungsverfahren werden die in konventionellen Kläranlagen in unterschiedlichen, nacheinander geschalteten Becken durchgeführten Reinigungsprozesse in einem Becken oder einer Kammer eines Behälters durchgeführt. Derartige SBR-Anlagen verfügen zumeist über zwei Becken beziehungsweise Behandlungsstufen, die zumeist als Kammern ausgebildet in einem gemeinsamen Behälter angeordnet sind. Bei größeren Anlagen werden auch separate Behälter für die einzelnen Behandlungsstufen eingesetzt. Die im Rahmen dieser Ausführungen benutzten Begriffe "Becken" und "Kammer" bezeichnen Behältnisse oder Teile davon, in denen die Reinigungsprozesse durchgeführt werden. Bei einer SBR-Anlage übernimmt ein erstes Becken typischerweise die mechanische Vorreinigung durch Absetzenlassen gröberer und schwerer Feststoffe. Gleichfalls dient dieses Vorklärbecken zur Pufferung der zugeführten Abwassermenge. Abgetrennt von diesem Vorklärbecken dient die zweite Kammer einer solchen SBR-Anlage als eigentlicher Prozess- oder Reaktorbehälter. Von dem Vorklärbecken wird in definierten zeitlichen Intervallen vorgeklärtes Abwasser in das Prozessbecken eingepumpt. Die eigentliche Abwasserreinigung erfolgt unter Verwendung biologischer Mittel, typischerweise unter Verwendung von Belebtschlamm. Da die Reinigung des Abwassers mit dem Belebtschlamm in dem Prozessbecken durchgeführt wird, erfolgt in diesem Becken auch eine Trennung von Belebtschlamm und gereinigtem Abwasser, damit letzteres aus dem Prozessbecken nach seiner Reinigung abgepumpt werden kann. Typischerweise wird der Reinigungsprozess zeitgetaktet gesteuert. Dieses bedeutet, dass die einzelnen Reinigungsschritte gemäß einem vorgegebenen Zeitschema nacheinander durchgeführt werden. Als wesentliche, in dem Prozessbecken einer SBR-Anlage durchgeführte Prozessphasen können folgende genannt werden:
- Füllphase zum Einbringen des zu reinigenden Abwassers in das Prozessbecken,
- Belüftungsphase zum Zuführen von Sauerstoff in das Prozessbecken und gleichzeitiges Vermischen von Abwasser und Belebtschlamm,
- Absetzphase zum Abtrennen des Belebtschlammes vom gereinigten Abwasser durch Sedimentation,
- Klarwasser-Abzugsphase zum Abpumpen des von dem Belebtschlamm getrennten gereinigten Abwassers als Klarwasser und
- Überschussschlamm-Abzugsphase zum Abziehen des Überschussschlammes aus dem Prozessbecken.

Biologische Reinigungsverfahren unterliegen hinsichtlich ihrer Wirkung unterschiedlichen Einflüssen und unterscheiden sich daher von statisch ablaufenden Verfahren. Als dynamische Faktoren, die Einfluss auf den Betrieb einer SBR-Anlage haben, sind vor allem die Aktivität des Belebtschlammes, dessen Alter sowie Umweltfaktoren, wie Temperatur etc. zu nennen.

Ein wesentlicher Faktor, der Einfluss auf die Effektivität einer solchen SBR-Anlage hat, ist die zu behandelnde Abwassermenge und als Indikator dafür die Füllstandshöhe beziehungsweise die durch eine Befüllung eingetretene Änderung der Füllstandshöhe in dem Prozessbecken. Gleiches gilt, wenn auch nicht mit derselben Prozessrelevanz, für das Vorklärbecken. Es ist daher wesentlich, die Füllstandshöhe vor allem im Prozessbecken zu erfassen. Hierzu ist in DE 199 15 887 A1 der Einsatz von Schwimmerschaltern vorgeschlagen worden. Mit diesen können der zugelassene Minimalfüllstand und der Maximalfüllstand des Prozessbeckens erfasst werden, so dass in Abhängigkeit von dem Erreichen des Minimalfüllstandes oder des Maximalfüllstandes durch eine Steuereinrichtung bestimmte Aktoren angesteuert werden. Beim Abpumpen des Klarwassers sinkt der Füllstand in dem Prozessbecken. Wird der vordefinierte minimale Füllstand erreicht, wird die diesbezügliche Pumpe abgeschaltet und es wird aus dem Vorklärbecken neues zu reinigendes Abwasser in das Prozessbecken eingepumpt, wenn zwischen diesen beiden Schritten nicht eine Stillstandsphase vorgesehen ist. Von Nachteil ist bei Einsatz derartiger Schwimmerschalter, dass diese der in dem Prozessbecken befindlichen Flüssigkeit - Abwasser und Belebtschlamm - ausgesetzt sind. Dieses kann, je nach Ausgestaltung der Schwimmerschalter nach einer gewissen Betriebsdauer zu Beeinträchtigungen führen. Daher müssen die Schwimmerschalter regelmäßig auf ihre Funktionstüchtigkeit überprüft werden. Überdies lassen sich mit Schwimmerschaltern nur mit entsprechend hohem Aufwand absolute Füllstände erfassen. Meistens werden Schwimmerschalter eingesetzt, die nur einen Schaltpunkt besitzen und daher nur einen definierten Höhenstand erkennen können. Wasserstände unterhalb oder oberhalb dieses Schaltpunktes können nicht differenziert erfasst werden.

Neben SBR-Anlagen, die wie vorbeschrieben Schwimmerschalter zur Füllstandsüberwachung verwenden, ist aus DE 203 20 908 U1 eine SBR-Anlage bekannt geworden, bei der eine Füllstandshöhenerfassung im Wege einer Druckmessung erfolgt. Bei dieser SBR-Anlage ist in die zur Belüftung des Prozessbeckens vorgesehene Luftleitung ein Drucksensor eingeschaltet. Die zur Belüftung vorgesehene Luftleitung mündet im Bereich des Bodens in das Becken. Dabei ist vorgesehen, dass die aus der Luftleitung austretende Luft möglichst feinperlig austritt. Aus diesem Grunde mündet die Luftleitung in einen Belüfterkopf mit einer Belüftermembran, durch die die durch die Luftleitung geförderte Luft in die in dem Prozessbecken befindliche Flüssigkeit hinein gefördert wird. Die Druckmessung dieser vorbekannten SBR-Anlage arbeitet nach dem so genannten Einperl-Prinzip. Bei einem Betrieb des Verdichters zum Fördern von Luft in einer Belüftungsphase des Beckens muss der Verdichter einen Druck in der Luftleitung aufbauen, der höher ist als der an der Mündung der Luftleitung anstehende hydrostatische Druck zuzüglich des Druckes, der benötigt wird, damit die Belüftermembran durchdrungen werden kann. Der hydrostatische Druck ist abhängig von der Höhe des Füllstandes der Flüssigkeit in dem Becken. Wird somit nach Aufbau eines Druckes in der Luftleitung zum Einperlenlassen von Luftblasen zum Belüften des Beckens der während des Betriebs des Verdichters in der Luftleitung herrschende Druck erfasst, soll aus dem ermittelten Druckmesswert grundsätzlich die Höhe des Füllstandes in diesem Becken ermittelt werden können. In der Praxis hat sich allerdings gezeigt, dass eine Füllstandshöhenerfassung in hinreichender Genauigkeit mit diesem Füllstandshöhen-Messverfahren nicht, jedenfalls nicht ohne Weiteres, realisierbar ist. Dieses ist bedingt durch zahlreiche Faktoren, die neben dem durch den Verdichter bereitgestellten Förderdruck Einfluss auf die Druckmessung haben und daher das ermittelte Ergebnis verfälschen können. Auch wenn derartige Störeinflüsse durch aufwändige Korrekturmaßnahmen im Zuge der Auswertung des oder der erhaltenen Druckmesssignale zumindest in Maßen korrigiert werden können, sind in solchen Korrekturverfahren sich ändernde Einflussfaktoren, wie beispielsweise schwankende Strömungswiderstände oder temperaturbedingten Leistungsänderungen des Verdichters oder Durchmesservergrößerungen eines Luftschlauches, insbesondere bei unterschiedlichen Temperaturen, kaum zu berücksichtigen. Daher eignet sich dieses Verfahren letztendlich nur zur Feststellung von ungefähren Füllstandshöhenänderungen.

Aus der nachveröffentlichten EP 1 860 073 A ist ein Verfahren zum Betrieb eines Drucklufthebersystems für eine Kleinkläranlage und ein Drucklufthebersystem beschrieben. Angeschlossen an die Druckluftleitung für den Druckluftheber ist eine Druckluftmessleitung mit einem Drucksensor zum Erfassen des in der Druckluftheberleitung befindlichen Luftdruckes. Eingesetzt werden kann dieses System jedoch nur in solchen Anlagen, die einen ausreichend hohen Flüssigkeitsfüllstand aufweisen, da die Mündung des Drucklufthebers mit nicht unerheblichem Abstand zum Boden des Behälters angeordnet ist. Überdies ist eine Druckmessung an einen Betrieb des Drucklufthebers gebunden und kann somit nur dann erfolgen, wenn mittels des Drucklufthebers Wasser aus einem Prozessbecken in ein weiteres gepumpt wird. Druckluftheber werden während des Reinigungsprozesses jedoch nur selten angesteuert.

Aus der Zusatzpatentanmeldung DE 195 15 366 A1 ist eine Regenwassernutzungsanlage sowie ein Betriebsverfahren für dieselbe beschrieben. Das Betriebsverfahren umfasst unter anderem eine Füllstandserfassung. Zu diesem Zweck sind der Regenwassernutzungsanlage eine Luftpumpe, eine Düse und eine in die Regenwassernutzungsanlage reichende Luftleitung zugeordnet. Angeschlossen an die Luftleitung der Düse nachgeschaltet ist ein Drucksensor. Die Luftleitung dient alleinig dem Zweck der Füllstandserfassung. Das in diesem Dokument beschriebene Messverfahren arbeitet prinzipiell wie das in DE 203 20 908 U1 beschriebene. Von diesem unterscheidet sich das in DE 195 15 366 A1 beschriebene Verfahren dadurch, dass vor der Düse ein Überdruck aufgebaut wird und für den Zeitraum der Druckmessung die Luftpumpe abgeschaltet wird. Erreicht wird durch diese Maßnahme, dass für den Zeitpunkt der Messung sich der Überdruck über die Luftleitung in die Regenwassernutzungsanlage hinein abbaut, wodurch eine gleichmäßigere Strömung erzielt wird, verglichen mit einer Druckmessung bei laufender Luftpumpe.

Ausgehend von DE 203 20 908 U1 liegt der Erfindung daher die Aufgabe zugrunde, ein eingangs genanntes Verfahren sowie eine eingangs genannte Kläranlage dergestalt weiterzubilden, dass eine Füllstandshöhenmessung nicht nur auf einfache und verlässliche Art und Weise durchgeführt werden kann, sondern dass mit dieser auch eine absolute Füllstandshöhenerfassung mit hinreichender Genauigkeit möglich ist.

Gelöst wird diese Aufgabe erfindungsgemäß durch ein eingangs genanntes Verfahren, bei dem zur Füllstandshöhenerfassung der in der Luftleitung herrschende Luftdruck im Anschluss an eine Luftförderperiode gemessen wird und zumindest für die Dauer der Messung des Luftdruckes der sich in der Luftleitung nach Beendigung der Luftförderperiode einstellende Luftdruck durch ein einen Luftrückfluss verhinderndes oder zumindest beeinträchtigendes Absperrorgan in Form eines Ventils aufrechterhalten wird oder dieser Luftdruck nur in einem die Messung nicht beeinträchtigenden Maße abfällt.

Die vorrichtungsbezogene Aufgabe wird durch eine eingangs genannte, gattungsgemäße Kläranlage gelöst, bei der in die Luftleitung in Strömungsrichtung der durch den Verdichter geförderten Luft dem Drucksensor vorgeschaltet ein einen Luftrückfluss verhinderndes oder zumindest beeinträchtigendes Absperrorgan in Form eines Ventils angeordnet ist.

Bei diesem Verfahren erfolgt eine Messung des in der Luftleitung herrschenden Druckes außerhalb der Luftförderperioden. Die Luftdruckmessung in der Luftleitung erfolgt im Anschluss an eine Luftförderperiode, mithin nach ihrer Beendigung. Zum Durchführen der Druckmessung wird der sich in der Luftleitung nach Beenden der Luftförderperiode einstellende Druck für die Zeitdauer der Messung aufrechterhalten, welches beispielsweise durch Absperren der Luftleitung zum Verhindern eines Luftrückflusses aus der Luftleitung erfolgt. Der in der Luftleitung herrschende Druck entspricht sodann dem durch die Wassersäule in dem Becken in der Luftleitung aufgebauten Druck. Durch die füllstandsabhängige Wassersäule in dem Becken ist die darin befindliche Flüssigkeit bestrebt, über die Mündung der Luftleitung in die Luftleitung einzudringen und die darin befindliche Luft entgegen ihrer ursprünglichen Förderrichtung aus dieser herauszudrücken. Da dieses gemäß einer Ausgestaltung der Erfindung jedoch durch Absperren der Luftleitung zwischen dem Verdichter und dem Drucksensor nicht möglich ist, entspricht dieser sich in der Luftleitung einstellende Luftdruck dem durch die Wassersäule gebildeten hydrostatischen Druck. Ein solcher Luftrückfluss kann auch durch ein dem Verdichter zugeordnetes Aggregat oder durch den Verdichter selbst realisiert sein. Der erhaltene Messwert korreliert unmittelbar mit dem durch die Wassersäule ausgeübten hydrostatischen Druck. Folglich kann aus dem ermittelten Druckmesswert ohne Weiteres und ohne besondere Korrekturmaßnahmen die Füllstandshöhe ermittelt werden. Dieses Verfahren erlaubt in hinreichender Genauigkeit eine absolute Füllstandshöhenerfassung der in dem Prozessbecken befindlichen Flüssigkeit.

Sofern der im Becken angeordnete Belüftungskopf am Ende der Luftleitung eine Belüftermembran trägt, ist deren Öffnungswiderstand, den die Druckluft zum Austritt in die Flüssigkeit übersteigen muss, zu berücksichtigen. Insofern umfasst die bei einer solchen Ausgestaltung vorgenommene Druckmessung in der Luftleitung den hydrostatischen Druck und den Öffnungswiderstand der Belüftermembran, wobei der ermittelte Messwert um den Öffnungswiderstand der Belüftermembran korrigiert wird.

Hinreichend genaue Druckmesswerte zum Ermitteln der Füllstandshöhe lassen sich gemäß einer weiteren Alternative der Erfindung auch gewinnen, wenn die in der Luftleitung befindliche Luft in dieser nicht, beispielsweise durch Absperren der Leitung, aufgestaut wird, sondern auch dann, wenn aus der Luftleitung mit einer bestimmten Leckrate Luft entweicht. Da es sich bei dieser Leckrate um eine Konstante handelt ist der erhaltene Messwert ohne großen Aufwand korrigierbar. Im Zuge einer Kalibrierung des Messverfahrens kann eine solche Leckrate bestimmt werden. Ein solches Kalibrieren kann auch während des Betriebs der Kläranlage in wiederholten Abständen erfolgen, um sich unter Umständen einstellende Messbedingungsänderungen zu erkennen und somit kompensieren zu können. Eine solche Leckrate kann system- bzw. leitungsbedingt oder auch bewusst vorgesehen sein. Beim bewussten Vorsehen ist Sorge dafür getragen, dass nach einer Beendigung des Luftförderbetriebes durch die Luftleitung der darin enthaltene Druck sich nicht sofort abbaut, sondern dass ein solcher Druckabbau oder Luftrückfluss gedrosselt erfolgt, damit durch den sich auch in diesem Fall innerhalb der Luftleitung im Anschluss an eine Luftförderperiode einstellenden Druck die gewünschte Füllstandshöhenerfassung vorgenommen werden kann.

Aufgrund der Möglichkeit des Erfassens absoluter Füllstandshöhen kann eine beispielsweise nach dem SBR-Verfahren arbeitende Kläranlage sehr viel effektiver betrieben werden. Die hohe Genauigkeit der Füllstandserfassung erlaubt eine Anpassung der Verfahrensparameter, um für die für die biologische Abwasserbehandlung eingesetzten Mittel, wie beispielsweise einen Belebtschlamm, optimale Bedingungen bereitzustellen.

Nachfolgend ist die Erfindung anhand von Ausführungsbeispielen unter Bezugnahme auf die beigefügten Figuren beschrieben. Es zeigen:
- **Fig. 1:**: in einer schematisierten Schnittdarstellung eine Kleinkläranlage, arbeitend nach dem SBR-Verfahren,
- **Fig. 2:**: ein Diagramm darstellend den Druckverlauf innerhalb einer Luftleitung der Kleinkläranlage der Figur 1 über die Zeit im Anschluss an eine Luftförderperiode und
- **Fig. 3:**: in einer schematisierten Schnittdarstellung eine Kläranlage gemäß einem weiteren Ausführungsbeispiel, arbeitend nach dem SBR-Verfahren.

Eine Kleinkläranlage 1 verfügt über einen Behälter 2 mit einer oberseitigen Öffnung, in die ein Deckel 3 eingelegt ist. Der Behälter 2 der Kleinkläranlage 1 ist in zwei Kammern unterteilt und verfügt zu diesem Zweck über eine Trennwand 4. Durch die Trennwand 4 ist ein erstes Becken bzw. eine erste Kammer geschaffen, die als Schlammspeicher und Puffer sowie einer Vorklärung dient und die in diesen Ausführungen als Vorklärbecken 5 bezeichnet ist. Bei dem anderen Becken bzw. bei der anderen Kammer handelt es sich um ein Prozessbecken 6. Die Kleinkläranlage 1 arbeitet nach dem SBR-Verfahren. Daher kann das Prozessbecken 6 auch als SBR-Becken angesprochen werden. In das Vorklärbecken 5 mündet ein Zulauf 7, durch den das zu klärende Rohwasser - das Abwasser - der Kleinkläranlage 1 zugeführt wird. Das Vorklärbecken 5 dient als Schlammspeicher sowie zur Vorklärung des durch den Zulauf 7 zugeführten Abwassers sowie zur Mengenpufferung. Aus dem Vorklärbecken 5 wird das vorgeklärte Abwasser mit einem Druckluftheber 8 in das Prozessbecken 6 gefördert.

In dem Prozessbecken 6, in dem die für ein SBR-Verfahren typischen Prozessschritte sukzessive durchgeführt werden, fördert ein Druckluftheber 9 nach der biologischen Reinigung das gereinigte Abwasser (Klarwasser) in einen Vorlagebehälter 10. Von diesem wird das Klarwasser einem Ablauf 11 zugeführt. Mittels einer als Druckluftheber konzipierten Abzugspumpe 12 wird der überschüssige Schlamm des Prozessbeckens 6 anschließend abgezogen und in den Schlammspeicher des Vorklärbeckens 5 gefördert.

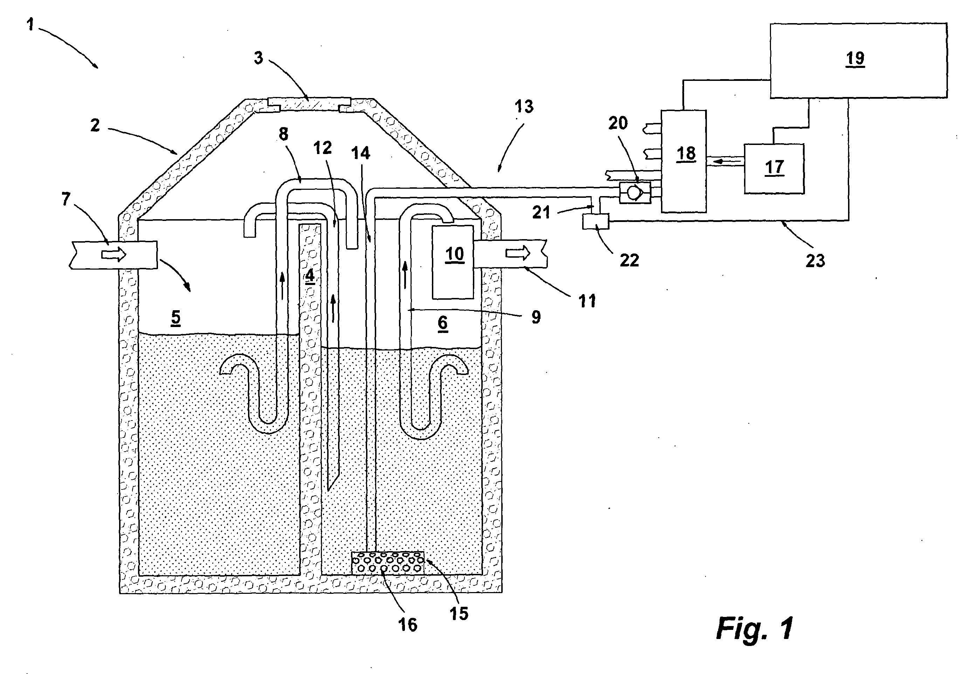

Bei dem dargestellten Ausführungsbeispiel ist in das Prozessbecken 6 eine Belüftungseinrichtung 13 eingebaut. Die Belüftungseinrichtung 13 umfasst eine an eine Luftleitung 14 angeschlossenen Belüfterkopf 15 mit einer Belüftermembran 16, über den die durch die Luftleitung 14 zugeführte Luft in das Prozessbecken 6 bzw. die darin befindliche Flüssigkeit abgegeben wird. Der Belüfterkopf 15 ist im Bereich des Bodens des Prozessbeckens 6 angeordnet. Die zugeführte Luft tritt aus die Belüftermembran 16 sehr feinblasig aus. Die in der Belüftermembran 16 in Figur 1 dargestellten Öffnungen dienen lediglich der schematisierten Darstellung des Vorhandenseins von Öffnungen. Aufgrund der Feinporigkeit der Belüftermembran 16 sind diese tatsächlich kaum zu erkennen. Ziel der Belüftungseinrichtung 13 ist, dem in dem Prozessbecken 6 bei dem dargestellten Ausführungsbeispiel enthaltenen Belebtschlamm Sauerstoff zuzuführen. Daher wird bevorzugt, dass die zugeführte Luft sehr feinblasig aus der Belüftermembran 16 austritt.

Die Luftleitung 14 wird beaufschlagt von einem Verdichter 17. Die von dem Verdichter 17 bei einem Betrieb geförderte Luft wird durch einen Druckluftverteiler 18 geführt, der mehrere Abgänge aufweist. Jeder der Abgänge ist innerhalb des Druckluftverteilers 18 mittels eines, bei dem dargestellten Ausführungsbeispiel als Magnetventil ausgebildeten Ventils (in Figur 1 nicht dargestellt) öffnenbar und verschließbar. Zum Steuern der Luftzufuhr sind der Verdichter 17 und die dem Druckluftverteiler 18 zugehörigen Magnetventile an eine Steuereinrichtung 19 angeschlossen. An einen der Abgänge des Druckluftverteilers 18 ist die für die Belüftung des Prozessbeckens 6 vorgesehene Luftleitung 14 angeschlossen. Dem Abgang der Luftleitung 14 dem Druckluftverteiler 18 nachgeschaltet ist in die Luftleitung 14 ein in Förderrichtung öffnendes und in der Gegenrichtung schließendes Rückschlagventil 20 eingeschaltet. In Strömungsrichtung der von dem Verdichter 17 geförderten Luft ist dem Rückschlagventil 20 ein in die Luftleitung 14 mündendes Messrohr 21 eines Drucksensors 22 nachgeschaltet. Aufgrund der Verbindung zwischen dem Messrohr 21 mit der Luftleitung 14 kann durch den Drucksensor 22 der in der Luftleitung 14 herrschende Luftdruck gemessen werden. Der Drucksensor 22 ist über eine Signalleitung 23 an die Steuereinrichtung 19 angeschlossen.

Die Kleinkläranlage 1 arbeitet, worauf bereits zuvor hingewiesen worden ist, nach dem SBR-Verfahren. Die Steuerung der einzelnen Prozessschritte erfolgt über die Steuereinrichtung 19. Als Stellgröße zum Steuern einzelner Prozessschritte wird auch der über den Drucksensor 22 ermittelte Druck in der Luftleitung 14 verwendet. Mittels des Drucksensors 22 erfolgt eine Füllstandshöhenerfassung in dem Prozessbecken 6. Die Füllstandshöhenerfassung wird durchgeführt, wenn durch die Luftleitung 14 keine Luft dem Prozessbecken 6 zugeführt wird. Dieses ist der Fall, wenn beispielsweise das dem Abgang des Druckluftverteilers 18, an dem die Luftleitung 14 angeschlossen ist, zugeordnete Magnetventil geschlossen ist oder wenn der Verdichter 17 nicht arbeitet. Die Druckmessung selbst erfolgt nach Abschluss einer Luftförderperiode, also nach Beendigung einer Zeitspanne, in der durch die Luftleitung 14 Luft in das Prozessbecken 6 eingebracht worden ist. Bei einer solchen Luftförderperiode kann es sich um eine solche handeln, die ohnehin im Zuge einer Beckenbelüftung als Prozessschritt durchgeführt wird. Gleichfalls kann es sich bei einer solchen Luftförderperiode auch um ein kurzzeitiges Einbringen von Luft in das Prozessbecken 6 handeln, letztendlich allein mit dem Zweck, die nachstehend beschriebene Füllstandshöhenerfassung vornehmen zu wollen. Im letzteren Fall wird die gegebenenfalls in die Luftleitung 14 über den Belüfterkopf 15 eingedrungene Flüssigkeit herausgedrückt. Ist kein Wasser durch die Belüftermembran 16 in den Belüfterkopf 15 und gegebenenfalls in die Luftleitung 14 eingedrungen, was aufgrund der kleinen Öffnungsweite der Poren der Belüftermembran 16 die Regel sein dürfte, dient das Einbringen von Luft in das Prozessbecken 6 zum Bereitstellen der notwendigen Messbedingungen. Somit ist Voraussetzung für die Durchführung der Messung, dass vor dem Messzeitpunkt in der Luftleitung ein solcher Druck aufgebaut wird, dass durch die Belüftermembran 16 Luft in das Prozessbecken 6 bzw. die darin befindliche Flüssigkeit eingebracht wird.

Nach Beenden einer solchen Luftförderperiode ist die in dem Prozessbecken 6 enthaltene Flüssigkeit aufgrund des Prinzips der kommunizierenden Röhren grundsätzlich bestrebt, in die Luftleitung 14 einzudringen. Dieses wäre der Fall, wenn das freie Ende der Luftleitung 14 nicht durch eine Belüftermembran verschlossen wäre. In einem solchen Fall kann die in der Luftleitung 14 enthaltene Luft aufgrund des bei einem Luftrückfluss sperrenden Rückschlagventils 20 nicht entweichen. Folglich wird die innerhalb der Luftleitung 14 befindliche Luft entsprechend der Wassersäule der Flüssigkeit in dem Prozessbecken 6 komprimiert, wodurch sich innerhalb der Luftleitung 14 ein Druck einstellt, der dem hydrostatischen Druck der Wassersäule bezogen auf die Mündung der Luftleitung 14 in das Prozessbecken 6 entspricht. Dieser Druck ist nicht zeitgleich mit der Beendigung der Luftförderung eingestellt. Aus diesem Grunde ist es zweckmäßig, den Druck in der Luftleitung 14 über den Drucksensor 22 in einem vordefinierten zeitlichen Abstand nach Beenden der Luftförderung durchzuführen.

Bei dem in Figur 1 dargestellten Ausführungsbeispiel ist das freie Ende der Luftleitung 14 an dem Belüfterkopf 15 mit der Belüftermembran 16 angeschlossen. Auch in diesem Fall stellt sich innerhalb der Luftleitung nach Abschluss einer Luftförderperiode ein Luftdruck ein, der in der Summe dem hydrostatischen Druck der Wassersäule am Belüfterkopf 15 in dem Prozessbecken 6 und dem Öffnungsdruck der Belüftermembran 16 entspricht. Der Öffnungsdruck ist derjenige Druck, der notwendig ist, damit durch die Belüftermembran 16 Luft hindurch gedrückt werden kann. Dieser Luftdruck hat sich in der Luftleitung 14 dann eingestellt, wenn sich nach Beenden einer Luftförderperiode der zunächst in der Luftleitung durch den Betrieb des Verdichters höhere Luftdruck abgebaut hat und zwar dadurch, dass durch Unterbinden eines Luftrückflusses durch die Sperrstellung des Rückschlagventils 20 der Druckabbau durch die Belüftermembran 16 hindurch in die in dem Prozessbecken 6 befindliche Flüssigkeit erfolgt ist. Versuche haben gezeigt, dass sich das Druckgleichgewicht üblicherweise innerhalb von zwei bis vier Sekunden nach Beenden einer Luftförderung eingestellt hat.

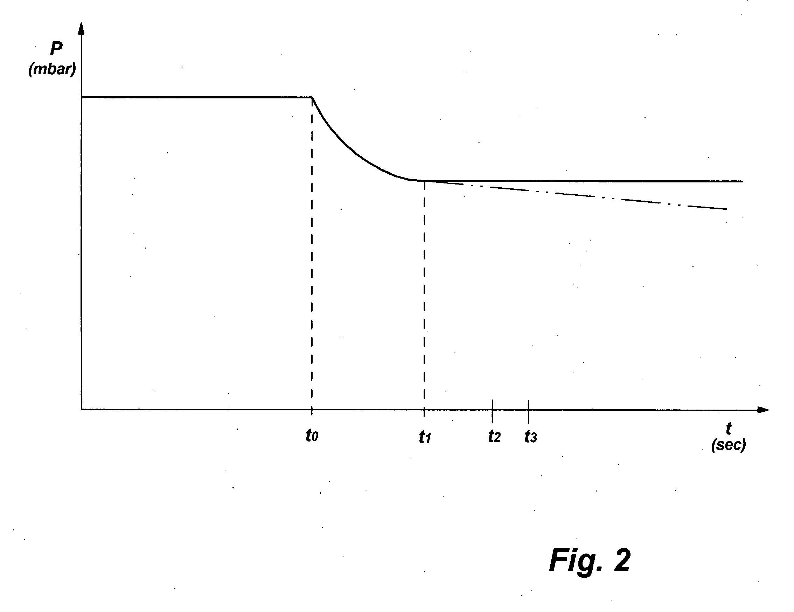

Figur 2 zeigt schematisiert die sich innerhalb der Luftleitung 14 einstellende Druckänderung, die sich nach einem Beenden einer Luftförderperiode bei der Belüftungseinrichtung 13 einstellt. Während einer Belüftungsperiode ist die Luftleitung 14 durch den Betrieb des Verdichters 17 luftbeaufschlagt. Der in der Luftleitung 14 erfassbare Druck ist höher als der durch die Wassersäule entgegenwirkende hydrostatische Druck zuzüglich des zum Öffnen der Belüftermembran 16 benötigten Druckes. Ein solcher Förderdruck ist erforderlich, damit die geförderte Luft aus der Luftleitung 14 bzw. dem Belüfterkopf 15 mit seiner Belüftermembran 16 austreten kann, da nicht nur der hydrostatische Druck der Wassersäule und der Öffnungsdruck der Belüftermembran sondern auch Reibungsverluste an den Leitungen und Strömungsverluste im Druckluftverteiler 18 überwunden werden müssen. Die in Figur 2 am linken Rand des Diagramms laufende Luftförderperiode wird im Zeitpunkt t₀ beendet, und zwar durch Schließen des dem Abgang des Druckluftverteilers 18, an den die Luftleitung 14 angeschlossen ist, zugeordneten Magnetventils. Ein weiterer Betrieb des Verdichters 17 stört die nachfolgende Druckmessung nicht. Unter Umständen wird von anderen, zum Teil auch in Figur 1 nicht dargestellten Einrichtungen, weiterhin Druckluft benötigt, so dass der Verdichter 17 weiterlaufen muss. Nach Beenden der Luftförderperiode in der Luftleitung 14 im Zeitpunkt t₀ sinkt der in der Luftleitung 14 befindliche Druck ab. Der Druckabfall ist bedingt durch den in der Luftleitung 14 zum Fördern notwendigerweise höheren Druck, gegenüber dem an dem Belüfterkopf 15 anliegenden hydrostatischen Druck zuzüglich des zum Öffnen der Belüftermembran 16 notwendigen Druckes. Daher tritt auch nach Beenden einer Belüftungsperiode in einem zeitlichen Nachlauf noch Luft aus der Luftleitung 14 in das Prozessbecken 6 bzw. die darin befindliche Flüssigkeit ein. Von dem Förderdruck, der im Zeitpunkt des Beendens einer Luftförderperiode innerhalb der Luftleitung 14 herrscht, fällt dieser auf ein Maß ab, der bei dem dargestellten Ausführungsbeispiel der Summe aus dem an der Mündung der Luftleitung 14 herrschenden hydrostatischen Druck und dem Öffnungsdruck der Belüftermembrane 16 entspricht. Es stellt sich mithin ein Druckgleichgewicht ein, da ein Luftrückfluss durch das dann geschlossene Rückschlagventil 20 verhindert ist. Dieser bei einer luftdichten Belüftungseinrichtung stabile Druckgleichgewichtszustand ist in Figur 2 im Zeitpunkt t₁ erreicht. Dieser Zeitpunkt wird abgewartet, bevor die Druckmessung mit dem Drucksensor 22 durchgeführt wird. Die Druckmessung mit dem Drucksensor 22 erfolgt also nach dem Zeitpunkt t₁, beispielsweise im Zeitpunkt t₂. Der von dem Drucksensor 22 generierte Messwert wird über die Signalleitung 23 an die Steuereinrichtung 19 übertragen, die aus dem gemessenen Druckwert den Füllstand des Prozessbeckens 6 berechnet. Da bei dem dargestellten Ausführungsbeispiel in dem Druckmesswert der Öffnungsdruck der Belüftermembran 16 enthalten ist, wird der durch den Drucksensor erhaltene Messwert um diese bekannte Größe korrigiert.

Das nachfolgende Beispiel dient zur Verdeutlichung der Druckmessung, wenn, wie in dem dargestellten Ausführungsbeispiel gezeigt, die Luft über eine Belüftermembran dem Prozessbecken zugeführt wird. Unterstellend, dass der Füllstand in dem Prozessbecken zwei Meter ist, beträgt der an der Mündung der Luftleitung 14 im Prozessbecken herrschende hydrostatische Druck 200 mbar. Damit Luft durch die Belüftermembran 16 hindurch treten kann, muss ein Öffnungswiderstand von beispielsweise 50 mbar überwunden werden. Der Öffnungswiderstand der Belüftermembran ist abhängig von seiner Materialzusammensetzung. Unterschiedliche Belüftermembrane weisen daher unterschiedliche Öffnungswiderstände auf. Damit durch die Luftleitung 14 Luft in das Prozessbecken 6 eingebracht werden kann, muss der Verdichter einen Förderdruck in der Luftleitung 14 von mehr als 250 mbar, also beispielsweise 300 mbar erzeugen. Nach Beenden der Luftförderperiode stellt sich aufgrund des vorbeschriebenen Druckgleichgewichts innerhalb der Luftleitung 14 ein Druck von 250 mbar ein. Korrigiert um den als bekannt vorausgesetzten Belüfterwiderstand von 50 mbar, der von dem tatsächlich gemessenen Luftdruck abzuziehen ist, ergibt dieses einen korrigierten Druckmesswert von 200 mbar, was wiederum einer Wassersäule von zwei Metern entspricht.

Um ein mögliches Altern der Belüftermembran und den sich dadurch langfristig erhöhenden Belüfterwiderstand zu kompensieren, wird in zeitlichen Abständen der Öffnungswiderstand der Belüftermembrane 16 ermittelt, beispielsweise im Zusammenhang mit einer ohnehin in zeitlichen Abständen durchgeführten Wartung der Kleinkläranlage 1. Eine Kalibrierung zur Kompensation eines sich ändernden Belüfterwiderstandes kann auch durch eine automatische Kalibrierung über die Steuereinrichtung 17 erfolgen. Dieses kann beispielsweise dadurch geschehen, dass bei einem der Steuerung bekannten Wasserstand ein Belüftungsintervall zur Messung durchgeführt wird und aus dem nach Abschalten des Verdichters gemessenen Druck der Öffnungswiderstand der Belüftermembran auf einfache Weise ermittelt und damit automatisch angepasst werden kann. Im Zuge des Betriebs der Kleinkläranlage ist zum Beispiel nach einem Klarwasserabzug der Wasserstand im Prozessbecken immer auf einem gleichen und bekannten Niveau. Unter Zugrundelegung dieses Wasserstandes kann die vorbeschriebene Kalibrierung erfolgen, die sodann im Anschluss an einen Klarwasserabzug durchgeführt werden kann.

Zum Erhöhen der Messgenauigkeit ist bei dem dargestellten Ausführungsbeispiel vorgesehen, dass die Druckmessung in kurzen zeitlichen Abständen ein oder mehrfach wiederholt wird. Symbolisiert ist dieses durch den weiteren Druckmesszeitpunkt t₃. Die Anzahl der Wiederholungen der Druckmessung kann von den jeweils zuvor ermittelten Druckergebnissen abhängig sein. Die ermittelten Druckergebnisse können im Zuge der weiteren Auswertung beispielsweise gemittelt werden, wenn in einer solchen Messreihe kein fallender Luftdruck detektiert wird. Wird im Zuge einer solchen Messreihe ein fallender Luftdruck detektiert, wird systemseitig jedoch kein Wasser aus dem Prozessbecken 6 abgezogen, so dass der Füllstand über die Messperiode hinweg als konstant angenommen werden kann, deutet dieses auf ein Leck in der Luftleitung 14 oder dem Rückschlagventil 20 hin. In einem solchen Fall ist davon auszugehen, dass die ersten ermittelten Druckmesswerte einer solchen Messreihe die tatsächliche Füllstandshöhe wiedergeben. Ist eine Leckrate hinsichtlich ihrer Größe bekannt, kann dieses im Wege einer Korrektur in die Auswertung der Messreihe einfließen.

In Figur 2 ist strichpunktiert beginnend im Zeitpunkt t₁ eine kontinuierliche Druckabnahme gezeigt, die sich bei einer konstanten Leckrate einstellen würde. Ist die Leckrate bekannt, kann die sich demzufolge einstellende fortschreitende Druckreduzierung, wie vorbeschrieben, zum Ermitteln der Füllstandshöhe über das Durchführen und Auswerten mehrerer Messungen korrigiert werden.

Für den Fall, dass eine Druckluftmessung ohne Einfluss einer Belüftermembran gewünscht wird, kann auch bei einer eine Belüftermembran verwendenden Belüftereinrichtung vorgesehen sein, der Luftleitung eine Belüfterkopfbypassleitung zuzuordnen. Bei einer solchen Bypassleitung mit vorzugsweise nur einer geringen Querschnittsfläche tritt durch die Luftleitung bei einem Betrieb des Verdichters geförderte Luft über die Bypassleitung unmittelbar in das Prozessbecken ein. Innerhalb der Luftleitung stellt sich dann nach Beendigung einer Luftförderperiode ein dem tatsächlichen hydrostatischen Druck entsprechender Druck ein, so dass der diesbezügliche Messwert nicht um den Öffnungswiderstand der Belüftermembran korrigiert werden muss.

Zum Fördern des vorgeklärten Abwassers aus dem Vorklärbecken 5 in das Prozessbecken 6 dient der Druckluftheber 8. Dieser ist in nicht näher dargestellter Art und Weise mit einer Luftleitung an den Druckluftverteiler 18 angeschlossen. Ferner sind bei dem dargestellten Ausführungsbeispiel auch in diese Luftleitung ein Drucksensor ebenso wie ein Rückschlagventil eingeschaltet, wie dieses zu der Belüftungseinrichtung 13 beschrieben ist. Somit kann auch über den Druckluftheber 8 eine Füllstandshöhenerfassung, wie dieses bezüglich der Belüftungseinrichtung 13 beschrieben worden ist, durchgeführt werden. Zu berücksichtigen ist hierbei, dass bei dieser Druckmessung der hydrostatische Druck im Bereich der Saugöffnung des Drucklufthebers 8 erfasst wird. Da die Höhe der saugseitigen Öffnung des Drucklufthebers 8 innerhalb des Vorklärbeckens 5 konstant ist, kann auswerteseitig zu der bekannten Höhe der saugseitigen Öffnung und dem ermittelten hydrostatischen Druck die Füllstandshöhe ohne Weiteres berechnet werden. Auf diese Weise kann eine Füllstandserfassung in den beiden Becken 5, 6 mit hinreichender Genauigkeit vorgenommen werden, so dass in Abhängigkeit von den ermittelten Füllständen oder auch Füllstandsänderungen die einzelnen Prozessschritte des SBR-Verfahrens in der Kleinkläranlage 1 entsprechend optimiert werden können. Das Optimieren betrifft beispielsweise das Anpassen der notwendigen Zeit zum Durchführen eines Verfahrensschrittes, der bei unterschiedlichen Füllstandshöhen eine unterschiedliche Mindestprozessdauer vorschreibt oder auch das Durchführen bestimmter Schritte.

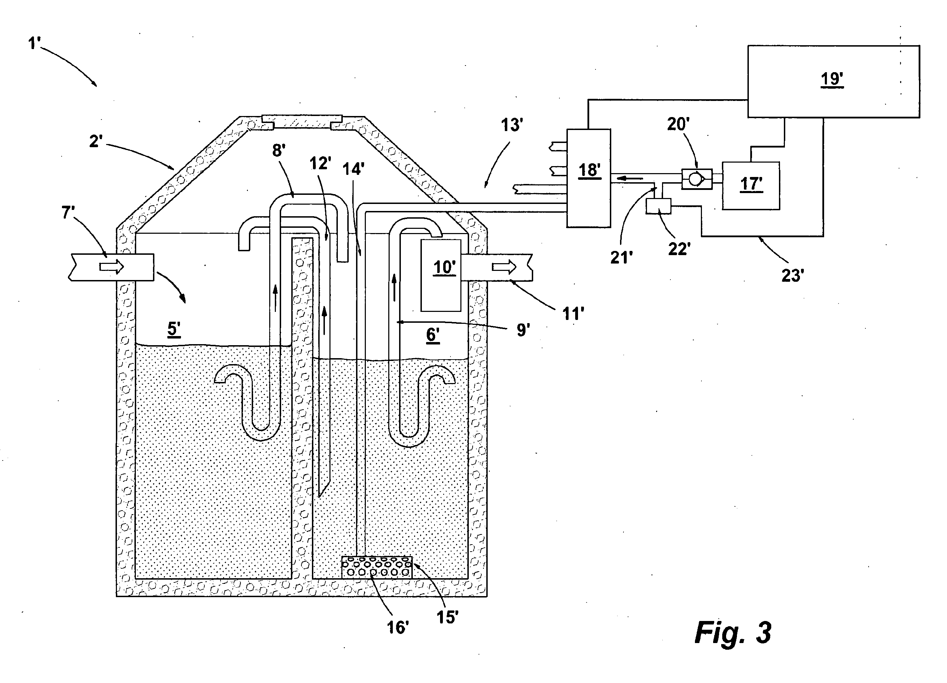

Figur 3 zeigt eine weitere Kleinkläranlage 1', die prinzipiell aufgebaut ist wie die Kleinkläranlage 1 der Figur 1. Aus diesem Grunde sind gleiche Elemente der Kleinkläranlage 1' mit denselben Bezugsziffern, ergänzt um ein "Apostroph" zu der Kleinkläranlage 1' gekennzeichnet. Die Kleinkläranlage 1' arbeitet nach denselben Prinzipien, wie dieses zu der Kleinkläranlage 1 beschrieben worden ist. Im Unterschied zu der Kleinkläranlage 1 ist bei der Kleinkläranlage 1' der Drucksensor 22' in die den Verdichter 17' mit dem Druckluftverteiler 18' verbindende Luftleitung eingesetzt bzw. mit seinem Messrohr 21' an dieses angeschlossen. Zur Vermeidung eines Luftrückflusses ist in diese Leitung in Förderrichtung dem Verdichter 17' nachgeschaltet ein Rückschlagventil 20' eingeschaltet. Anstelle des Einsatzes des Rückschlagventils 20' kann auch ein anderes Ventil dienen oder bei der Auswertung des ermittelten Druckmesssignals, wie dieses bereits zu der Kleinkläranlage 1 beschrieben worden ist, die durch den Verdichter 17' bei seinem Nichtbetrieb entweichende Luft als Leckrate berücksichtigt werden. Bei der Kleinkläranlage 1' wird somit nur ein einziger Drucksensor 22' benötigt, um eine Luftdruckmessung, insbesondere für eine Füllstandshöhenermittlung durchführen zu können, unabhängig davon, ob diese in der Luftleitung 14' oder beispielsweise auch über einen der Druckluftheber erfolgt. Zum Durchführen einer solchen Druckmessung wird der Verdichter 17' abgeschaltet und es bleibt nur diejenige an den Druckluftverteiler 18' angeschlossene Luftleitung, beispielsweise die Luftleitung 14' geöffnet, in der eine Luftdruckmessung durchgeführt werden soll. Die anderen Abgänge des Druckluftverteilers 18' sind durch entsprechende Ansteuerung der Magnetventile geschlossen.

Der oder die Drucksensoren der Kleinkläranlagen 1, 1' können Teil der Steuereinrichtung sein. Bei der Messleitung handelt es sich dann vorzugsweise um einen Silikonschlauch, der in die jeweilige Luftleitung, der der Drucksensor zugeordnet ist, mündet.

Die zu den Kleinkläranlagen 1, 1' beschriebenen Drucksensoren 22 bzw. 22' können ebenfalls zum Überwachen des Luftförderbetriebes verwendet werden.

Von besonderem Vorteil beim Gegenstand des beschriebenen Verfahrens sowie der beschriebenen Kleinkläranlage ist, dass die Druckmessung und damit die Füllstandshöhenermittlung außerhalb der einzelnen Becken erfolgen kann und hierzu lediglich ein in die Luftleitung eingebauter bzw. mit dieser in Verbindung stehender Drucksensor benötigt wird. Ein solcher innerhalb der Luftleitung befindlicher Drucksensor kann auch zum Überwachen des Luftförderprozesses eingesetzt werden, etwa um Undichtigkeiten zu ermitteln. Als Drucksensoren eignen sich Sensoren der unterschiedlichsten Art, beispielsweise elektromagnetische oder auch elektronische.

Auch wenn die Erfindung anhand einer Kleinkläranlage, arbeitend nach dem SBR-Verfahren beschrieben worden ist, eignet sich die beschriebene Füllstandshöhenermittlung auch für andere Kläranlagen, insbesondere solche, die bereits über eine Belüftungseinrichtung verfügen. Derartige bestehende Anlagen können ohne Weiteres entsprechend umgerüstet werden. Hierzu bedarf es lediglich eines Eingriffes in die Steuerung der Anlage.

### Bezugszeichenliste

- 1, 1': Kleinkläranlage
- 2, 2': Behälter
- 3: Deckel
- 4: Trennwand
- 5, 5': Vorklärbecken
- 6, 6': Prozessbecken
- 7, 7': Zulauf
- 8, 8': Druckluftheber
- 9, 9': Druckluftheber
- 10, 10': Vorlagebehälter
- 11, 11': Ablauf
- 12, 12': Abzugspumpe
- 13, 13': Belüftungseinrichtung
- 14, 14': Luftleitung
- 15: Ejektor
- 16: Belüftermembran
- 17, 17': Verdichter
- 18, 18': Druckluftverteiler
- 19, 19': Steuereinrichtung
- 20, 20': Rückschlagventil
- 21, 21': Messrohr
- 22, 22': Drucksensor
- 23, 23': Signalleitung

## Patentansprüche

1. Verfahren zum Betreiben einer Kläranlage mit wenigstens einem Prozessbecken (6, 6'), insbesondere einer nach dem SBR-Verfahren arbeitenden Kleinkläranlage (1, 1'), bei welchem Verfahren wenigstens ein Becken (6, 6') der Kläranlage (1, 1') in zeitlichen Abständen zum Zuführen von Sauerstoff an den darin enthaltenen Belebtschlamm belüftet wird, und in diesem Becken (6, 6') eine Füllstandshöhenerfassung durch Messen des in der Luftleitung (14, 14') herrschenden Druckes und anschließendem Auswerten des Messergebnisses erfolgt, **dadurch gekennzeichnet, dass** zur Füllstandshöhenerfassung der in der Luftleitung (14, 14') herrschende Luftdruck im Anschluss an eine Luftförderperiode gemessen wird und zumindest für die Dauer der Messung des Luftdruckes der sich in der Luftleitung (14, 14') nach Beendigung der Luftförderperiode einstellende Luftdruck durch ein einen Luftrückfluss verhinderndes oder zumindest beeinträchtigendes Absperrorgan in Form eines Ventils (20, 20') aufrechterhalten wird oder dieser Luftdruck nur in einem die Messung nicht beeinträchtigenden Maße abfällt.

2. Verfahren nach Anspruch 1, **dadurch gekennzeichnet, dass** die Luftförderperiode, in deren Anschluss die zur Füllstandserfassung durchzuführende Druckmessung in der Luftleitung (14, 14') vorgenommen wird, durch Abschalten des Verdichters (17, 17') beendet wird.

3. Verfahren nach Anspruch 1, **dadurch gekennzeichnet, dass** die Luftförderperiode, in deren Anschluss die zur Füllstandserfassung durchzuführende Druckmessung in der Luftleitung (14, 14') vorgenommen wird, durch Absperren der Luftleitung (14, 14') beendet wird, wobei die Luftleitung (14, 14') in Förderrichtung der Luft zwischen dem Verdichter (17, 17') und dem in die Luftleitung (14, 14') integrierten Drucksensor (22, 22') gesperrt wird.

4. Verfahren nach einem der Ansprüche 1 bis 3, **dadurch gekennzeichnet, dass** das gemessene Drucksignal in Bezug auf eine aus der Luftleitung (14, 14') austretende Leckrate korrigiert wird.

5. Verfahren nach einem der Ansprüche 1 bis 4, **dadurch gekennzeichnet, dass** die Druckmessung in einem vordefinierten zeitlichen Abstand nach dem zeitlichen Ende (t**₀**) der vorangegangenen Luftförderperiode durchgeführt wird.

6. Kläranlage mit wenigstens einem Prozessbecken (6, 6') und zumindest einer Belüftungseinrichtung (13, 13') zum Zuführen von Sauerstoff an den in dem Becken (6, 6') enthaltenen Belebtschlamm, umfassend einen Verdichter (17, 17'), eine an den Verdichter (17, 17') angeschlossene und von diesem bei einem Betrieb desselben beaufschlagte, in dem Becken (5, 6; 5', 6') mündende Luftleitung (14, 14') sowie einen in die Luftleitung (14, 14') eingeschalteten Drucksensor (22, 22'), **dadurch gekennzeichnet, dass** in die Luftleitung (14, 14') in Strömungsrichtung der durch den Verdichter (17, 17') geförderten Luft dem Drucksensor (22, 22') vorgeschaltet ein einen Luftrückfluss verhinderndes oder zumindest beeinträchtigendes Absperrorgan in Form eines Ventils (20, 20') angeordnet ist.

7. Kläranlage nach Anspruch 6, **dadurch gekennzeichnet, dass** das Absperrorgan ein Rückschlagventil (20, 20') ist.

8. Kläranlage nach Anspruch 6, **dadurch gekennzeichnet, dass** das Absperrorgan ein Ventil, insbesondere ein Magnetventil ist.

9. Kläranlage nach einem der Ansprüche 6 bis 8, **dadurch gekennzeichnet, dass** der Drucksensor in die den Verdichter (17') mit einem Druckluftverteiler (18') verbindende Förderleitung eingeschaltet ist bzw. zum Messen des darin herrschenden Luftdruckes mit dieser in Verbindung steht.

10. Kläranlage nach einem der Ansprüche 6 bis 8, **dadurch gekennzeichnet, dass** der Drucksensor (22) in eine in ein Becken (6) mündende Luftleitung (14) eingeschaltet ist oder zum Messen des darin herrschenden Druckes mit dieser in Verbindung steht.

## Claims

1. Method for operating a wastewater treatment plant including at least one processing tank (6, 6'), in particular a small wastewater treatment plant (1, 1') that operates according to the SBR method (sequencing batch reactor), by means of which method at least one tank (6, 6') of the wastewater treatment plant (1, 1') is ventilated at intervals of time for supplying oxygen to the activated sludge contained therein, and a fill level is detected in said tank (6, 6') by measuring the pressure prevailing in the air pipe (14, 14') and the measuring result being subsequently evaluated, **characterized in that** for detecting the fill level, the air pressure prevailing in the air pipe (14, 14') is measured following an air conveying period and the air pressure set in the air pipe (14, 14') after termination of the air conveying period is maintained, at least for the duration of the measuring of the air pressure, by means of a shut-off organ in the form of a valve (20, 20') that prevents or at least impairs a backflow of air or said air pressure drops only to an extent that does not impair the measurement.

2. Method according to Claim 1, **characterized in that** the air conveying period, following which the pressure measuring to be carried out for detecting the fill level in the air pipe (14, 14') is performed, is terminated by switching off the compressor (17, 17').

3. Method according to Claim 1, **characterized in that** the air conveying period, following which the pressure measuring to be carried out for detecting the fill level in the air pipe (14, 14') is performed, is terminated by shutting-off the air pipe (14, 14'), wherein the air pipe (14, 14') is blocked in the air conveying direction between the compressor (17, 17') and the pressure sensor (22, 22') that is integrated in the air pipe (14, 14').

4. Method according to one of Claims 1 to 3, **characterized in that** the measured pressure signal is corrected with reference to a leak rate escaping from the air pipe (14, 14').

5. Method according to one of Claims 1 to 4, **characterized in that** the pressure measurement is carried out at a predefined interval of time after the end in time (t₀) of the previous air conveying period.

6. Wastewater treatment plant having at least one processing tank (6, 6') and at least one ventilating device (13, 13') for supplying oxygen to the activated sludge contained in the tank (6, 6'), said wastewater treatment plant comprising a compressor (17, 17'), an air pipe (14, 14') which is connected to the compressor (17, 17'), is acted upon by said compressor during the operation of said compressor and opens out in the tank (5, 6; 5', 6'), and a pressure sensor (22, 22') that is inserted into the air pipe (14, 14'), **characterized in that** a shut-off organ in the form of a valve (20, 20') that prevents or at least impairs a backflow of air is located in the air pipe (14, 14') in the direction of flow of the air conveyed through the compressor (17, 17'), connected upstream of the pressure sensor (22, 22').

7. Wastewater treatment plant according to Claim 6, **characterized in that** the shut-off organ is a non-return valve (20, 20').

8. Wastewater treatment plant according to Claim 6, **characterized in that** the shut-off organ is a valve, in particular a solenoid valve.

9. Wastewater treatment plant according to one of Claims 6 to 8, **characterized in that** the pressure sensor is inserted into the conveying pipe that connects the compressor (17') to a compressed air distributor (18') or communicates with said conveying pipe for measuring the air pressure prevailing therein.

10. Wastewater treatment plant according to one of Claims 6 to 8,
**characterized in that** the pressure sensor (22) is inserted into an air pipe (14) that opens out into a tank (6) or communicates with said air pipe for measuring the pressure prevailing therein.

## Revendications

1. Procédé destiné au fonctionnement d'une station d'épuration comprenant au moins un bassin d'épuration (6, 6'), notamment d'une micro-station d'épuration (1, 1') fonctionnant selon le procédé du réacteur biologique séquentiel SBR, lors duquel procédé au moins un bassin (6, 6') de la station d'épuration (1, 1') est ventilé selon des intervalles de temps afin d'apporter de l'oxygène aux boues activées contenues dans ce dernier, et une détection du niveau de remplissage est réalisée dans ce bassin (6, 6') au moyen d'une mesure de la pression dans la conduite d'air (14, 14'), le résultat de la mesure étant ensuite exploité **caractérisé en ce que** l'on mesure, afin de détecter le niveau de remplissage, le niveau de la pression d'air dans la conduite d'air (14, 14') au terme d'une période d'acheminement d'air et **en ce que** l'on maintient, au moins pendant la mesure de la pression d'air, la pression d'air qui s'instaure dans la conduite d'air (14, 14') au terme de la période d'acheminement d'air, au moyen d'un organe de verrouillage sous la forme d'une soupape (20, 20') empêchant ou du moins évitant le reflux d'air, ou cette pression d'air ne se réduisant que dans une proportion n'empêchant pas la mesure.

2. Procédé selon la revendication 1 **caractérisé en ce que** la période d'acheminement d'air, au terme de laquelle s'effectue la mesure de pression dans la conduite d'air (14, 14') destinée à détecter le niveau de remplissage, se termine par la coupure du compresseur (17, 17').

3. Procédé selon la revendication 1 **caractérisé en ce que** la période d'acheminement d'air, au terme de laquelle s'effectue la mesure de pression dans la conduite d'air (14, 14') destinée à détecter le niveau de remplissage, se termine par l'obturation de la conduite d'air (14, 14'), la conduite d'air (14, 14') étant obturée dans le sens d'acheminement de l'air entre le compresseur (17, 17') et le capteur de pression (22, 22') intégré dans la conduite d'air (14, 14').

4. Procédé selon l'une des revendications 1 à 3 **caractérisé en ce que** le signal de pression mesuré est corrigé en fonction d'un taux de fuite s'échappant de la conduite d'air (14, 14').

5. Procédé selon l'une des revendications 1 à 4 **caractérisé en ce que** la mesure de pression est réalisée à un intervalle de temps prédéfini, au terme (t₀) de la période d'acheminement d'air précédente.

6. Station d'épuration avec au moins un bassin d'épuration (6, 6') et au moins un dispositif de ventilation (13, 13') destiné à apporter de l'oxygène aux boues activées contenues dans le bassin (6, 6'), comportant un compresseur (17, 17'), une conduite d'air (14, 14') débouchant dans le bassin (5, 6 ; 5', 6') raccordée au compresseur (17, 17') et alimentée par ce dernier lorsqu'il est en fonctionnement, ainsi qu'un capteur de pression (22, 22') intégré dans la conduite d'air (14, 14') **caractérisée en ce qu'**il est disposé dans la conduite d'air (14, 14') dans le sens de circulation de l'air acheminé par le compresseur (17, 17'), à l'amont du capteur de pression (22, 22'), un organe de verrouillage sous la forme d'une soupape (20, 20') empêchant ou du moins évitant le reflux d'air.

7. Station d'épuration selon la revendication 6 **caractérisée en ce que** l'organe de verrouillage est un clapet anti-retour (20, 20').

8. Station d'épuration selon la revendication 6 **caractérisée en ce que** l'organe de verrouillage est une soupape, notamment une électrovanne.

9. Station d'épuration selon l'une des revendications 6 à 8 **caractérisée en ce que** le capteur de pression est intégré dans la conduite d'acheminement raccordant le compresseur (17') avec le répartiteur (18') d'air comprimé, ou qu'il est en liaison avec cette dernière afin de mesurer la pression d'air qui y règne.

10. Station d'épuration selon l'une des revendications 6 à 8 **caractérisée en ce que** le capteur de pression (22) est intégré dans une conduite d'air (14) débouchant dans un bassin (6) ou qu'il est en liaison avec cette dernière afin de mesurer la pression d'air qui y règne.
